# DEMANDE DE BREVET EUROPEEN

(11) **EP 0 798 914 A1**
(43) Date de publication de la demande: **01.10.1997**
(21) Numéro de dépôt: 97420051.1
(22) Date de dépôt: 26.03.1997
(51) Int. Cl.: H04M 17/02

(54) **Procédé et dispositif d'ouverture/fermeture d'un terminal de télécommunication publique et terminal de télécommunication publique comprenant un tel dispositif**

(30) Priorité: 29.03.1996 FR 9604210
(71) Demandeur: Mecelec Electronique, 07300 Tournon-sur-Rhône (FR)
(72) Inventeur: Dupond, Jean Marie, 07500 Guilherand (FR); Devic, Jean Noel, 07130 Cornas (FR)
(74) Mandataire: Myon, Gérard Jean-Pierre

(57) **Abrégé**

Procédé d'ouverture/fermeture d'un terminal de télécommunication publique, tel qu'un téléphone (1) comprenant un fond (2) sensiblement vertical et un caisson (7) formant enveloppe externe, caractérisé en ce qu'il consiste à déplacer ledit caisson par rapport audit fond, en translation selon une direction inclinée par rapport à l'horizontale.

Le dispositif comprend au moins deux plans inclinés (2c, 2d, 2e, 2f) aptes à coopérer avec des éléments de guidage (11, 12) du caisson en translation par rapport au fond.

## Description

L'invention a trait à un procédé et à un dispositif d'ouverture/fermeture d'un terminal de télécommunication publique et à un terminal de télécommunication publique comprenent un tel dispositif.

Un terminal de télécommunication publique peut être constitué par un téléphone publique, un ensemble comprenant un téléphone et un transmetteur de données en facsimilé, un terminal vidéo utilisant un réseau de télécommunication, par exemple du type Minitel (marque déposée), ou tout autre terminal de télécommunication dont les éléments constitutifs internes ne sont pas censés être accédés par un utilisateur.

Un téléphone, par exemple un téléphone public, comprend généralement un fond fixé sur une cloison porteuse ou un poteau à l'intérieur d'une cabine et un caisson formant enveloppe externe du téléphone, ce caisson portant un clavier permettant la numérotation, un support pour le combiné et un ou plusieurs orifices d'introduction d'un moyen de paiement tel que des pièces de monnaie ou une carte magnétique ou à puce. Les caissons des téléphones connus de l'art antérieur sont généralement montés sur le fond fixe au moyen d'une articulation verticale composée de deux charnières réglables et d'une tringlerie guidée qui est actionnée par une serrure de verrouillage disposée sur la face opposée à la charnière. Cette construction des dispositifs de l'art antérieur comprend de nombreuses pièces mécaniques en mouvement, en particulier les éléments de tringlerie, et nécessite le réglage précis des charnières afin de limiter le jeu entre le caisson et le fond pour assurer une bonne étanchéité et éviter toute ouverture frauduleuse du téléphone par insertion d'un objet entre ses deux éléments constitutifs essentiels.

En outre, dans le cas où un téléphone est fixé dans un coin d'une pièce ou d'une cabine, son ouverture peut être gênée car le caisson vient en butée contre le mur ou la paroi situé sur le côté et à proximité du téléphone. L'accès à l'intérieur du téléphone est ainsi limité, ce qui gêne l'opérateur lors de la maintenance du dispositif. Ceci est, en particulier, le cas lorsque le téléphone est installé dans un habitacle de faibles dimensions utilisé, par exemple, pour des cabines téléphoniques montées en batterie à l'intérieur d'un lieu public tel qu'une gare ou un aéroport. Enfin, dans les téléphones connus, la serrure qui maintient le caisson en position fermée par rapport au corps du téléphone doit actionner un verrouillage en plusieurs points pour éviter les risques d'arrachement frauduleux d'une partie du caisson. Il en résulte des systèmes de fermeture complexes et sujets à des dysfonctionnements.

Ces problèmes peuvent apparaître avec tous les types de terminal de télécommunication publique.

L'invention vise à résoudre ces problèmes et propose un procédé et un dispositif fiables d'ouverture/fermeture d'un terminal de télécommunication publique, ne nécessitant pas de réglage compliqué et permettant l'accès à l'intérieur du terminal, y compris lorsque celui-ci est disposé en coin ou dans un habitacle de faibles dimensions.

Dans cet esprit, l'invention concerne un procédé d'ouverture/fermeture d'un terminal de télécommunication publique comprenant un fond sensiblement vertical et un caisson formant enveloppe externe, caractérisé en ce qu'il consiste à déplacer ledit caisson par rapport audit fond en translation, selon une direction inclinée par rapport à l'horizontale.

Grâce à l'invention, le caisson du terminal peut être déplacé selon une direction qui ne l'amène pas en butée contre une cloison disposée à proximité du terminal. Le procédé de l'invention permet en outre de s'affranchir d'un dispositif de charnières et d'une tringlerie complexe et nécessitant des réglages précis.

Selon un aspect avantageux de l'invention, le procédé comprend une étape de pivotement du caisson autour d'un axe sensiblement horizontal. Grâce à cet aspect de l'invention, l'accès à l'intérieur du terminal est facilité.

L'invention concerne aussi un dispositif permettant de mettre en oeuvre le procédé de l'invention et, plus spécifiquement, un dispositif d'ouverture/fermeture d'un terminal de télécommunication publique comprenant un fond sensiblement vertical et un caisson formant enveloppe externe, caractérisé en ce qu'il comprend au moins deux plans inclinés aptes à coopérer avec des éléments de guidage dudit caisson en translation par rapport audit fond.

Le mouvement de translation du caisson obtenu grâce au dispositif de l'invention permet de dégager celui-ci par rapport au fond sans le diriger vers une cloison ou un mur contre lequel il pourrait venir en butée.

Selon un aspect avantageux de l'invention, le dispositif comprend quatre plans inclinés et les éléments de guidage sont constitués par deux barres aptes à coopérer chacune, avec deux des plans inclinés. Grâce à cet aspect de l'invention, le caisson est fermement guidé en translation lors de son mouvement, ce qui élimine tout risque de coincement.

Selon un autre aspect particulièrement avantageux de l'invention, on peut prévoir qu'au moins l'un des plans inclinés comprend un logement de réception d'un des éléments de guidage alors que le caisson est apte à pivoter autour d'un axe horizontal défini par ce logement. Ainsi, lorsque l'élément de guidage est reçu dans le logement formant goulotte du plan incliné de ce mode de réalisation de l'invention, le caisson peut pivoter pour libérer l'accès à l'intérieur du téléphone, ce qui facilite encore les opérations de maintenance.

Selon les modes de réalisation de l'invention, on peut prévoir que les plans inclinés sont portés par le fond alors que les éléments de guidage sont portés par le caisson ou que les plans inclinés sont portés par le caisson et que les éléments de guidage sont portés par le fond.

Selon un autre aspect de l'invention, les plans inclinés sont orientés par rapport à l'horizontale avec un angle compris entre 30° et 60°, de sorte que le passage du caisson de sa position de fermeture à sa position d'ouverture est réalisé grâce à un effort de soulèvement et que si cet effort de soulèvement est interrompu, le caisson revient dans sa position initiale de fermeture sous l'effet de son poids propre.

L'invention concerne enfin un terminal de télécommunication publique comprenant un dispositif conforme à l'invention.

L'invention sera mieux comprise et d'autres avantages de celle-ci apparaîtront plus clairement à la lumière de la description qui va suivre d'un mode de réalisation d'un dispositif d'ouverture/fermeture d'un téléphone conforme à son principe, donnée uniquement à titre d'exemple et faite en référence aux dessins annexés dans lesquels :
- la figure 1 est une vue en perspective avec arrachements partiels d'un téléphone incorporant le dispositif de l'invention ;
- la figure 2 est une vue en coupe, transversale et médiane, des parties supérieure et inférieure du téléphone de la figure 1 alors que le caisson est en position de fermeture ;
- la figure 3 est une vue analogue à la figure 2 alors que le caisson est dans une première position en cours d'ouverture ;
- la figure 4 est une vue analogue aux figures 2 et 3 alors que le caisson est dans une seconde position en cours d'ouverture et
- la figure 5 est une vue en coupe, transversale et médiane, du téléphone de la figure 1 lors du basculement du caisson.

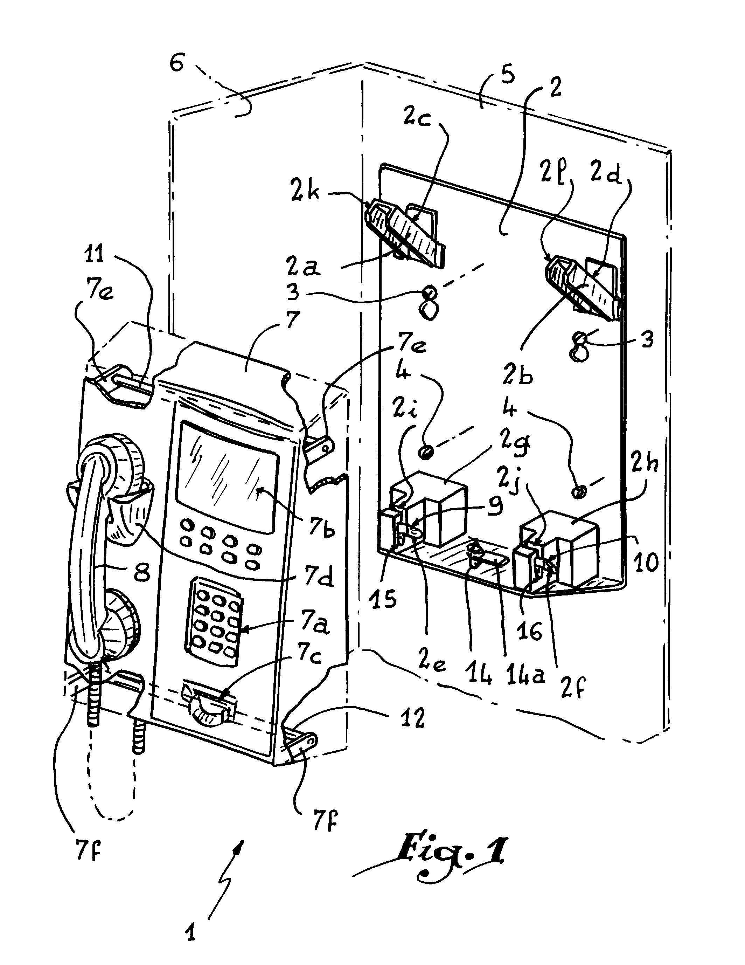

Le téléphone 1 représenté à la figure 1 comprend essentiellement un fond 2, fixé par tout moyen adéquat, et par exemple par des vis 3 et 4, sur une cloison 5 appartenant, par exemple, à un habitacle de cabine téléphonique. On peut noter que le fond 2 est positionné dans un angle, c'est-à-dire dans la zone de raccordement de la cloison 5 avec une paroi latérale 6. Des éléments constitutifs du téléphone tels que des circuits électriques imprimés, un monnayeur ou un dispositif de lecture/écriture de cartes magnétiques ou à puce montés sur le fond 2 ne sont pas représentés pour la clarté du dessin.

Le téléphone 1 de l'invention comprend aussi un caisson 7, formant enveloppe externe du téléphone et comprenant, entre autres, un clavier de numérotation 7a, un dispositif d'affichage 7b, une fente 7c d'insertion d'une carte magnétique ou à puce et un support 7d pour un combiné 8. Le caisson est destiné à former l'habillage extérieur du téléphone 1 et à protéger des éléments fixés sur le fond 2 ou contre la face interne du caisson 7 contre les intempéries, les chocs et toute tentative de manipulation frauduleuse.

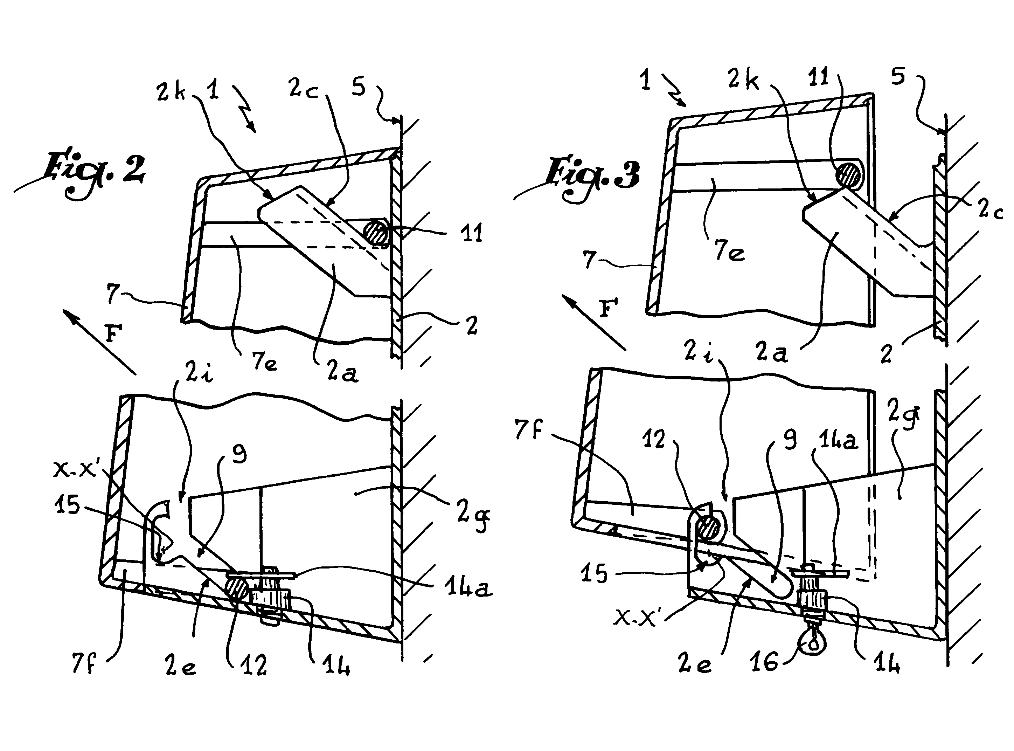

Conformément à l'invention, le fond 2 porte deux pattes 2a et 2b dont la partie supérieure forme des plans inclinés 2c et 2d orientés par rapport à l'horizontale selon un angle compris entre 30 et 60°, de préférence voisin de 45°. Deux autres plans inclinés 2e et 2f sont respectivement formés dans deux blocs 2g et 2h situés dans la partie inférieure du fond 2. Les plans inclinés 2e et 2f sont sensiblement parallèles aux plans inclinés 2c et 2d. Ces plans inclinés 2e et 2f constituent respectivement les faces inférieures de deux rainures 9 et 10 dont l'une 9 apparaît plus clairement à la figure 2.

Le caisson 7 est muni, dans sa partie supérieure, de pattes 7e supportant une barre 11 sensiblement horizontale. De même, il comprend dans sa partie inférieure des pattes 7f qui supportent une barre 12 globalement parallèle à la barre 11. Les barres 11 et 12 s'étendent approximativement sur toute la largeur du téléphone 1. L'écartement des barres 11 et 12 est déterminé de façon à ce que, lorsque la barre 11 est en appui sur les plans inclinés 2c et 2d, la barre 12 est en appui sur les plans inclinés 2e et 2f, de sorte que les barres 11 et 12 constituent des éléments de guidage du caisson en translation par rapport au fond 2 selon une direction F définie par les plans inclinés 2c à 2f. Ainsi, chaque barre 11 ou 12 est apte à coopérer avec deux des plans inclinés, ceux-ci étant situés près des bords latéraux du fond 2. Compte tenu de la géométrie des blocs 2g et 2h, la barre 12 est prisonnière des rainures 9 et 10 lorsqu'elle est en contact avec les plans inclinés 2e et 2f. Chaque bloc 2g et 2h porte dans sa partie supérieure une gorge, respectivement 2i et 2j, permettant la mise en place de la barre 12 dans les rainures 9 et 10. Ces gorges 2i et 2j sont aussi utilisées lorsqu'il est nécessaire de démonter le caisson 7 par rapport au fond 2, par exemple pour son échange.

Selon une variante non représentée de l'invention, les blocs 2g et 2h peuvent ne pas comprendre de gorges dans leur partie supérieure. Dans ce cas, pour le montage du dispositif, la barre 12 est d'abord insérée dans les rainures 9 et 10 puis montée sur les pattes 7f.

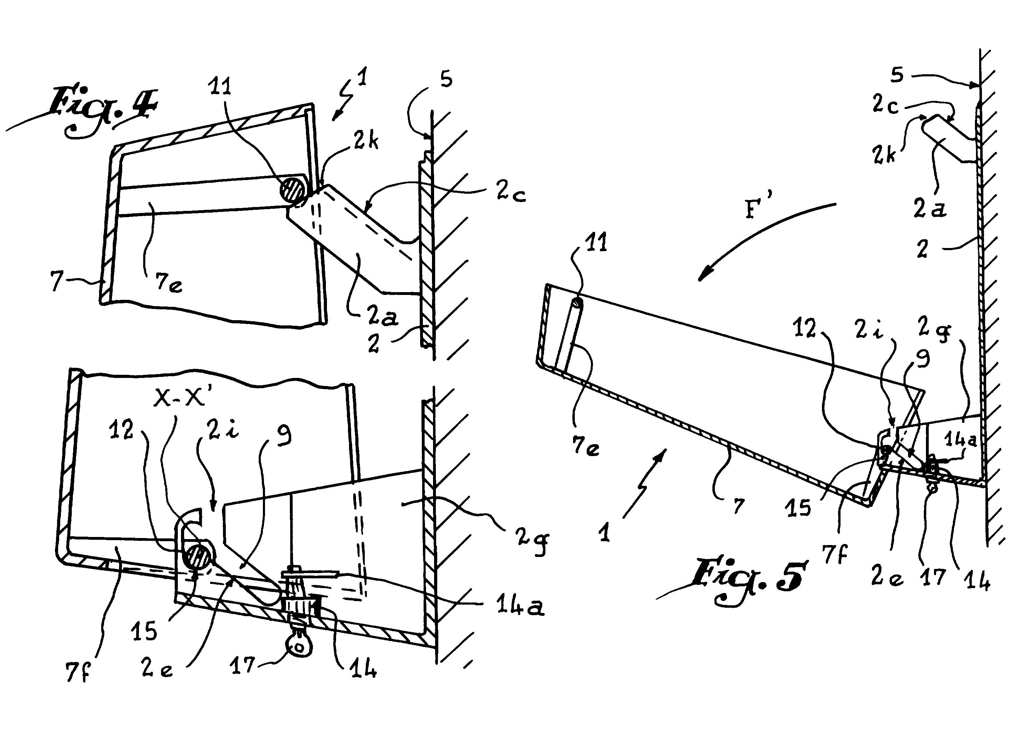

Le fonctionnement, qui est décrit en référence aux figures 2 à 5, est le suivant : En position de fermeture, le caisson 7 est plaqué contre le fond 2, comme représenté à la figure 2. Une serrure 14, munie d'un pène 14a, est apte à coincer le caisson 7 par rapport au fond 2 en immobilisant la barre 12 en translation. Lorsqu'il est nécessaire d'ouvrir le téléphone 1, la serrure 14 est déverrouillée au moyen d'une clé 17 de façon à amener le pène 14a dans une position dans laquelle il ne s'oppose pas au mouvement de la barre 12. Dans cette position qui est représentée à la figure 3, du fait de la coopération des plans inclinés 2c à 2f et des barres 11 et 12, un effort manuel de soulèvement exercé sur la face inférieure ou les faces latérales du caisson 7 permet de le dégager dans une direction parallèle à ces plans inclinés. Ceci permet de faire subir au caisson 7 une translation qui l'amène de la position de la figure 2 à la position de la figure 3 selon la flèche F parallèle aux plans inclinés 2c à 2f.

A la position de la figure 3, le caisson 7 a atteint le point haut de sa trajectoire.

Il est à noter que si, au cours du mouvement de translation du caisson 7 entre les positions des figures 2 et 3, l'effort de soulèvement est interrompu, le caisson revient, sous l'effet de son poids propre, dans sa position initiale de la figure 2 et le téléphone est en position de fermeture, de sorte que les connexions électriques entre les éléments fixés sur le fond 2 et les éléments fixés sur le caisson 7 ne risquent pas d'être détruites en cas de fausse manoeuvre de l'opérateur.

Lorsque le caisson est dans la position de la figure 3, si l'utilisateur continue à exercer un effort de traction sur le caisson pour le dégager par rapport au fond, compte tenu de ce que la barre 12 est prisonnière des rainures 9 et 10, la barre 11 dépasse le point haut des plans inclinés 2c et 2d, de sorte que le caisson suit une trajectoire de translation parallèle aux surfaces d'extrémité 2k et 2l des pattes 2a et 2b afin de rejoindre la position de la figure 4.

Dans cette position, la barre inférieure 12 est positionnée, du fait du mouvement suivant les surfaces 2k et 2l, dans deux logements 15 et 16 en forme de goulotte.

Pour intervenir à l'intérieur du téléphone 1 de l'invention, il est alors possible de faire pivoter le caisson 7 autour d'un axe sensiblement horizontal XX' défini comme étant l'axe des logements 15 et 16, qui servent de goulotte pour la barre 12 dont l'axe de symétrie est alors confondu avec l'axe XX'. Ceci permet le passage de la position de la figure 4 à la position de la figure 5 grâce au pivotement selon la flèche F'.

Dans cette position, l'opérateur peut facilement travailler sur les composants électriques, électroniques ou mécaniques situés à l'intérieur de l'enveloppe formée par le caisson 7.

On peut noter, en particulier, que le fonctionnnement qui vient d'être décrit permet de déplacer le caisson 7 sans interférence avec la paroi latérale 6 alors que l'ouverture totale d'un téléphone de l'art antérieur n'aurait pas été possible si le caisson avait été articulé sur le fond au moyen d'une charnière verticale disposée sur la gauche du téléphone. Ainsi, l'invention permet de déplacer le caisson du téléphone dans une direction qui est forcément libre de tout obstacle puisqu'elle correspond à la position de l'utilisateur en face du téléphone.

Lorsque les opérations de maintenance sont terminées, la fermeture de l'appareil est réalisée en exerçant, à partir de la position de la figure 5, un effort de basculement du caisson 7 jusqu'au contact de la barre supérieure 11 avec les pattes 2a et 2b, ce qui permet d'atteindre la position de la figure 4. L'opérateur repousse alors le caisson dans une direction parallèle aux surfaces 2k et 2l de façon à atteindre le point haut de la trajectoire. Le caisson est alors guidé en translation par les plans inclinés 2c à 2f et par les barres 11 et 12 pour rejoindre la position de fermeture de la figure 1 sous l'effet de son poids propre et, éventuellement, d'une poussée vers le bas exercée par l'opérateur. Il peut alors être verrouillé en position grâce au pène 14a de la serrure 14 qui immobilise la barre 12 en translation parallèlement aux plans inclinés 2c à 2f.

L'invention permet en particulier de déplacer le pène 14a alors que le caisson 7 est déjà en place sur le fond 2. Ainsi, le pène et la serrure ne servent qu'à éviter le mouvement de translation à l'ouverture vers le haut mais ne sont pas soumis à un effort permanent lorsque le téléphone est fermé. La serrure 14 est simple et permet un verrouillage efficace du téléphone sans effort mécanique important et sans utilisation d'une tringlerie complexe et sujette à des dysfonctionnements.

Il est a noter que la fonction des barres 11 et 12 peut être remplie par des ergots portés par les pattes 7e et 7f qui sont en contact avec les plans inclinés de l'invention et/ou pénètrent dans les rainures 9 et 10. Selon cette variante non représentée de l'invention, les guides sont en contact avec les plans inclinés alors qu'ils ne s'étendent pas sur sensiblement toute la largeur du caisson 7.

L'invention à été présentée avec les plans inclinés portés par le fond et les éléments de guidage, c'est-à-dire les barres 11 et 12, portées par le caisson. Cependant, il est possible, sans sortir du cadre de l'invention, de procéder à une inversion de structure et de prévoir que les plans inclinés sont portés par le caisson alors que les éléments de guidage sont portés par le fond.

L'invention a été décrite en relation avec un téléphone publique mais elle s'applique à tout terminal de télécommunication publique qu'il comprenne ou non un transmetteur de données en facsimilé ou un teminal vidéo.

## Revendications

1. Procédé d'ouverture/fermeture d'un terminal de télécommunication publique (1) comprenant un fond (2) sensiblement vertical et un caisson (7) formant enveloppe externe, caractérisé en ce qu'il consiste à déplacer ledit caisson par rapport audit fond en translation selon une direction (F) inclinée par rapport à l'horizontale.

2. Procédé d'ouverture/fermeture d'un terminal de télécommunication publique selon la revendication 1, caractérisé en ce qu'il comprend une étape de pivotement dudit caisson (7) autour d'un axe (XX') sensiblement horizontal.

3. Dispositif d'ouverture/fermeture d'un terminal de télécommunication publique (1) comprenant un fond (2) sensiblement vertical et un caisson (7) formant enveloppe externe, caractérisé en ce qu'il comprend au moins deux plans inclinés (2c, 2d, 2e, 2f) aptes à coopérer avec des éléments de guidage (11, 12) dudit caisson en translation par rapport audit fond.

4. Dispositif d'ouverture/fermeture d'un terminal de télécommunication publique selon la revendication 3, caractérisé en ce qu'il comprend quatre plans inclinés (2c, 2d, 2e, 2f) et en ce que les éléments de guidage sont constitués par deux barres (11, 12) aptes à coopérer, chacune, avec deux desdits plans inclinés.

5. Dispositif d'ouverture/fermeture d'un terminal de télécommunication publique selon l'une des revendications 3 ou 4, caractérisé en ce qu'il comprend au moins un logement (15, 16) de réception d'un desdits éléments de guidage (12), ledit caisson étant apte à pivoter autour d'un axe sensiblement horizontal (XX') défini par ledit logement.

6. Dispositif d'ouverture/fermeture d'un terminal de télécommunication publique selon l'une des revendications 3 à 5, caractérisé en ce que lesdits plans inclinés (2c, 2d, 2e, 2f) sont portés par ledit fond (2) et lesdits éléments de guidage (11, 12) sont portés par ledit caisson (7).

7. Dispositif d'ouverture/fermeture d'un terminal de télécommunication publique selon l'une des revendications 3 à 5, caractérisé en ce que lesdits plans inclinés sont portés par ledit caisson et lesdits éléments de guidage sont portés par ledit fond.

8. Dispositif d'ouverture/fermeture d'un terminal de télécommunication publique selon l'une des revendications 3 à 7, caractérisé en ce que lesdits plans inclinés (2c, 2d, 2e, 2f) sont orientés par rapport à l'horizontale avec un angle compris entre 30° et 60°.

9. Dispositif d'ouverture/fermeture d'un terminal de télécommunication publique selon l'une des revendications 3 à 8, caractérisé en ce que l'un (2e, 2f) au moins desdits plans inclinés constitue un bord d'une rainure (9, 10) dans laquelle pénètre au moins partiellement l'un desdits éléments de guidage (12).

10. Dispositif d'ouverture/fermeture d'un terminal de télécommunication publique selon la revendication 3, caractérisé en ce qu'il comprend une serrure (14) dont le pène (14a) est apte à immobiliser en translation l'un desdits éléments de guidage (12).

11. Terminal de télécommunication publique (1) comprenant un dispositif d'ouverture/fermeture selon l'une des revendications 3 à 10.
